# EUROPEAN PATENT SPECIFICATION

(11) **EP 2 017 154 B1**
(45) Date of publication and mention of the grant of the patent: **07.09.2011**
(21) Application number: 07741305.2
(22) Date of filing: 10.04.2007
(51) Int. Cl.: B61H 1/00, F16D 49/00, F16D 65/06

(54) **BRAKE SHOE MOUNTING STRUCTURE**
BREMSBACKEMONTAGESTRUKTUR
STRUCTURE DE MONTAGE DE SEGMENT DE FREIN

(30) Priority: 25.04.2006 JP 2006121009
(43) Date of publication of application: 21.01.2009
(73) Proprietor: Nabtesco Corporation, Tokyo 105-0022 (JP)
(72) Inventor: ASANO, Yoshio, Kobe-shi Hyogo 651-2271 (JP); OIE, Hideyuki, Kobe-shi Hyogo 651-2271 (JP)
(74) Representative: Intès, Didier Gérard André
(86) International application number: PCT/JP2007/057869
(87) International publication number: WO 2007/123018

(56) References cited:
- EP-A1- 0 226 816
- EP-A2- 0 278 376
- JP-A- 9 118 230
- JP-A- 09 118 230
- JP-Y1- 45 031 979
- JP-Y1- 49 009 416
- US-A- 1 444 462
- US-A- 1 592 780

## Description

### TECHNICAL FIELD

The present invention relates to a brake shoe mounting structure by which a brake shoe having a mounting portion protruding from a mounting surface which is opposite to a surface pressed onto a wheel tread of a railcar is fixed to a brake-shoe head by inserting a brake-shoe cotter into a mounting hole drilled through the mounting portion.

### BACKGROUND ART

A known mounting structure for mounting a brake shoe to a brake-shoe head in a railcar tread brake system is illustrated in Fig. 8 of the Japanese Unexamined Patent Publication (Tokukaihei) No. 9-118230 (patent document 1). In this structure, the brake shoe is fixed in such a way that a convex portion (mounting portion) protruding from the back surface of the brake shoe is inserted into a concave portion of the brake-shoe head supported by a brake lever pin (connecting pin for the connection with a hanger and a push bar), and then a brake-shoe cutter is inserted so as to penetrate the brake-shoe head and the mounting portion from above the brake-shoe head. However, to insert or pull out the long brake-shoe cotter reaching from the top to the bottom of the brake-shoe head, it is necessary to insert or pull out the brake-shoe cotter from above the brake-shoe head, where a working space is small. This has been a problem of low workability.

As a brake shoe mounting structure for solving the problem above, the patent document 1 recites a structure of mounting a brake shoe to a brake-shoe head without using a brake-shoe cotter. This structure is arranged so that a convex portion of the brake shoe is fit into a concave portion of the brake-shoe head in the direction toward the side face of the wheel, and then a side-face opening of the concave portion of the brake-shoe head is closed from the side face by an openable lid, thereby preventing the brake shoe from dropping outward away from the side face.

### DISCLOSURE OF THE INVENTION

### TECHNICAL PROBLEM

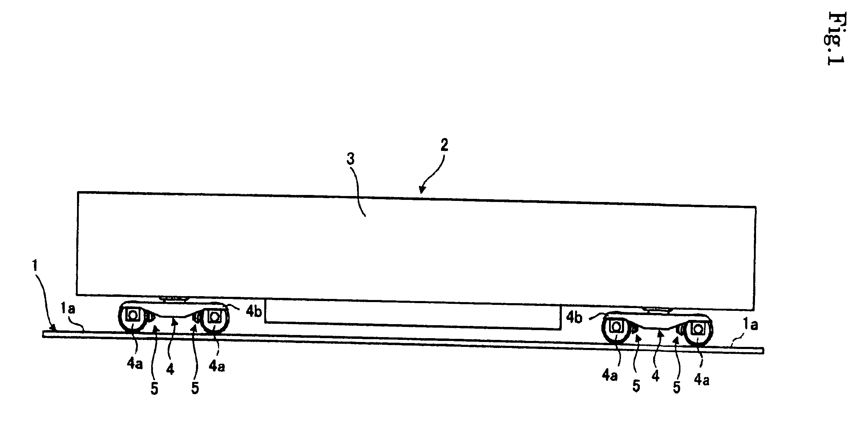

However, the brake shoe usable in the brake shoe mounting structure recited in the patent document 1 is different from the conventional brake shoe shown in Fig. 1, in terms of the shape of a part which engages with the brake-shoe head. Therefore existing brake shoes cannot be used and a brake shoe having a special shape is required. This increases costs.

In consideration of the above, an object of the present invention is to provide a brake shoe mounting structure in which an existing brake shoe is usable and operations of mounting and detaching are easily performable.

### TECHNICAL SOLUTION AND EFFECTS

A brake shoe mounting structure of the present invention is used for a railcar brake system that controls the rotation of a wheel of a railcar by pressing a brake shoe onto the tread of the wheel, and relates to a brake shoe mounting structure which fixes a brake shoe to a brake-shoe head by a brake-shoe cotter.
For achieving the object above, the brake shoe mounting structure of the present invention has the below-described features.

The first aspect of the brake shoe mounting structure of the present invention for achieving the aforesaid object is such that a brake shoe mounting structure for a rail car tread, by which a brake shoe having a mounting portion protruding from a mounting surface is fixed to a brake-shoe head in such a way that the mounting portion is inserted into the brake-shoe head and a brake shoe cotter is inserted into a mounting hole of the mounting portion, comprises: the brake-shoe head which allows the mounting portion to penetrate thereto and has a mounting opening regulating, by contacting the mounting portion, a positional change of the brake shoe in a rotational direction of a wheel of a railcar; the brake-shoe cotter which is L-shaped and has an insertion section inserted into the mounting hole and regulating a positional change of the brake shoe and a bend portion bending from a longitudinal edge of the insertion section; and a locking mechanism which regulates a positional change of the brake-shoe cotter inserted into the mounting hole; wherein, the brake-shoe head has an insertion opening which is long in a direction of insertion of the brake-shoe cotter into the mounting hole and allows the brake-shoe cotter to be inserted into the mounting hole in a direction in parallel to the rotational axis of the wheel, the brake-shoe cotter is shaped so as to allow an edge of the brake-shoe cotter near the bend section to protrude from the insertion opening when the insertion section is inserted into the mounting hole, and the locking mechanism has a first locking member which is swingably supported by the brake-shoe head at one end, and the first locking member is capable of swinging between (i) a locked state in which the first locking member is in contact with the bend section and a positional change of the brake-shoe cotter toward an upper edge of the insertion opening is regulated and (ii) an unlocked state in which the positional change of the brake-shoe cotter is unregulated.

According to this structure, the brake shoe can be fixed to the brake-shoe head by inserting the brake-shoe cotter from the side face of the brake-shoe head (i.e. in the direction in parallel to the rotational axis of the train wheel) . This allows an attaching/detaching operation to be easily done.
Furthermore, since the structure enables to mount a brake shoe in which a mounting hole is formed in a mounting portion protruding from a mounting surface, a brake shoe having a known shape is usable. This is cost-effective because it is unnecessary to produce a brake shoe having a special shape.
Furthermore, in the locked state in which the brake shoe is fixed, the brake-shoe cotter does not fall out from the mounting hole because a positional change of the bend section is regulated by the locking mechanism. Therefore the brake shoe is surely fixed to the brake-shoe head.

The second aspect of the brake shoe mounting structure of the present invention is such that the locking mechanism further includes a first spring member which is provided on the brake-shoe head so as to bias the first locking member, and in the locked state the first locking member is biased by the first spring member in a swinging direction of maintaining the locked state, whereas, in the unlocked state in which the first locking member is swung from the locked state for a predetermined angle, the first locking member is biased in a direction of maintaining the unlocked state.

According to this structure, the first locking member is maintained in the unlocked state by the first spring member, and hence the operator is not required to keep the first locking member in the unlocked state. This improves the operating efficiency. Furthermore, to swing the first locking member from the locked state to the unlocked state, it is necessary to apply a force against the biasing force of the first spring member. It is therefore possible to prevent the locked state from being canceled on account of vibration associated with the driving of the car, and hence the fixation of the brake shoe to the brake-shoe head is further ensured.

The third aspect of the brake shoe mounting structure of the present invention is such that the locking mechanism further includes a second locking member which is provided on the first locking member and is movable to be perpendicular to a swinging surface of the first locking member, and the brake-shoe head has an engaging portion which is, in the locked state, engaged with the second locking member so as to restrict a swinging movement of the first locking member toward the unlocked state.

According to this structure, the swinging movement of the first locking member from the locked state to the unlocked state is regulated by the engagement of the second locking member with the engaging portion, and the locked state is maintained by the engagement. It is therefore possible to surely maintain the locked state even when a large force is applied to the first locking member.

The fourth aspect of the brake shoe mounting structure of the present invention is such that the locking mechanism further includes a second spring member which biases the second locking member in such a way as to maintain the second locking member to be engaged with the engaging portion, and when the first locking member moves from the unlocked state to the locked state, the second locking member is in contact with the engaging portion and biased in a direction opposite to a biasing direction of the second spring member, so as to permit shifting to the locked state, and after the shifting to the locked state, the second locking member is maintained at a position of being engaged with the engaging portion because the second spring member recovers elasticity.

According to this structure, since the engagement of the second locking member with the engaging portion is automatically locked after the first locking member is swung to the locked state, it is unnecessary to independently operate the second locking member when the operation of mounting the brake shoe is carried out. Therefore the mounting operation is efficiently done.

The fifth aspect of the brake shoe mounting structure of the present invention is such that the brake shoe mounting structure further comprises a flanged section which is provided on the edge near the bend section and is longer than the shorter diameter of the insertion opening.

This structure prevents the operator from erroneously inserting the brake-shoe cotter into the cotter insertion opening form the bend section side (i.e. prevents reverse-insertion). It is therefore possible to prevent the occurrence of rattling or the like due to insufficient fixation of the brake shoe to the brake-show head on account of reverse-insertion.

### BRIEF DESCRIPTION OF THE DRAWINGS

[Fig. 1]
   Fig. 1 is a profile of a railcar whose brake system adopts a brake shoe mounting structure of an embodiment of the present invention.
[Fig. 2]

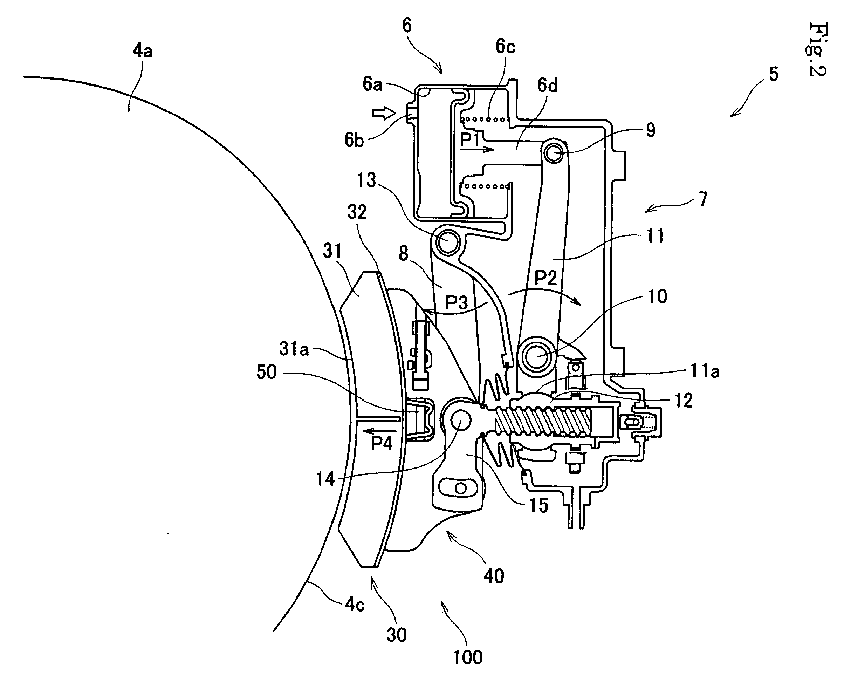

   Fig. 2 is an enlarged view of the brake system of the railcar shown in Fig. 1.
[Fig. 3]

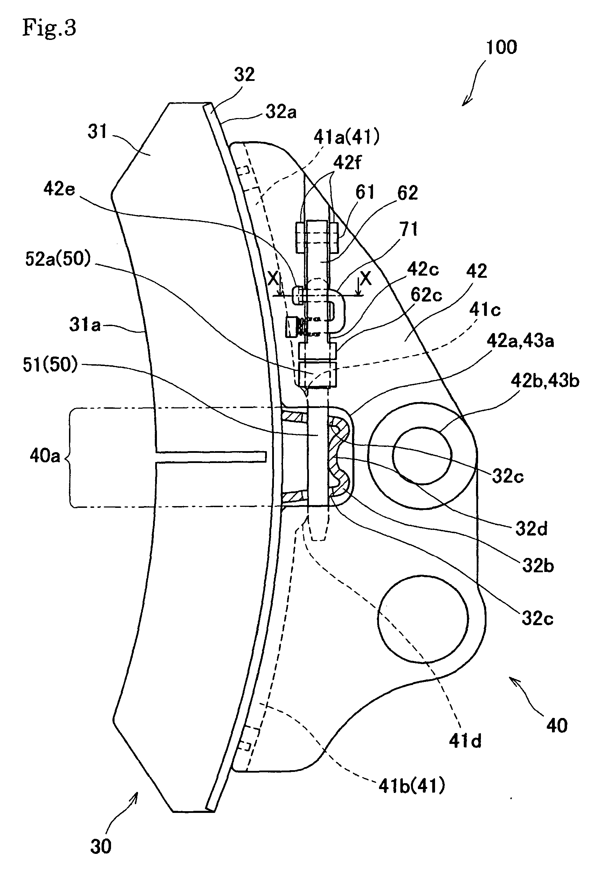

   Fig. 3 is an enlarged view (profile) of the brake shoe mounting structure shown in Fig. 2.
[Fig. 4]

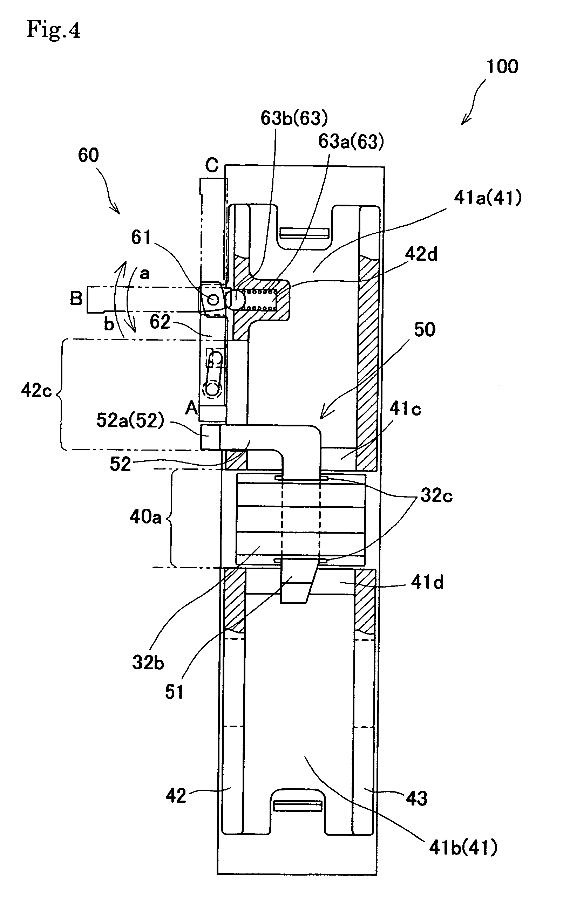

   Fig. 4 is an elevation of the brake shoe mounting structure shown in Fig. 3.
[Fig. 5]

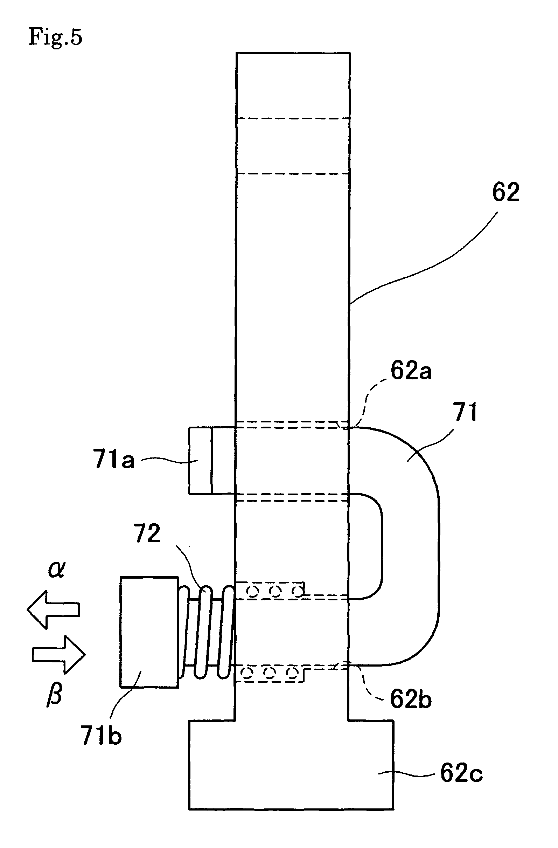

   Fig. 5 is an enlarged view (profile) of the locking mechanism shown in Fig. 3.
[Fig. 6]

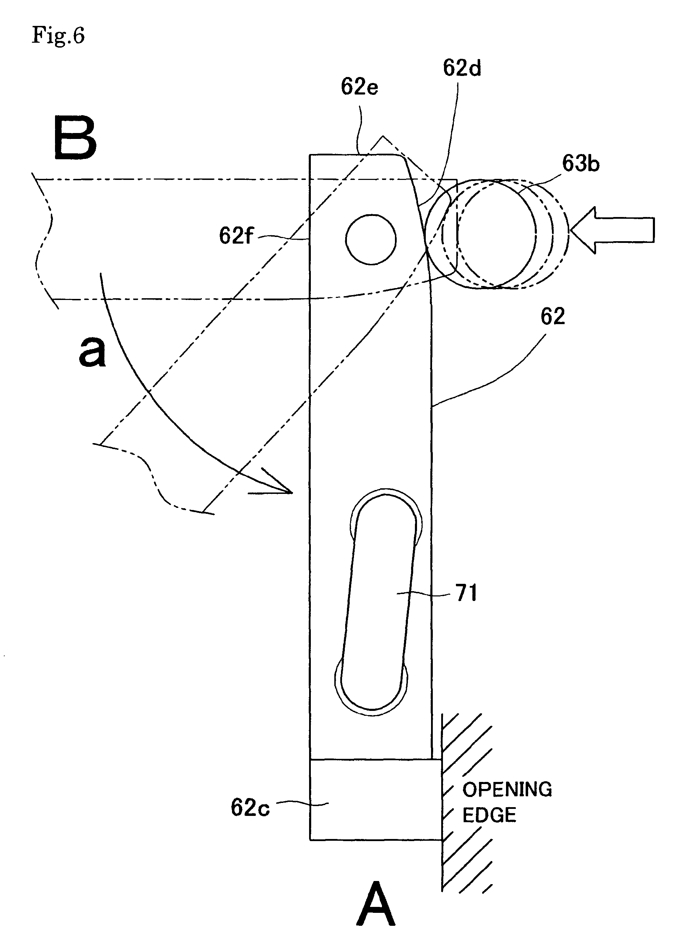

   Fig. 6 is an enlarged view (elevation) of the locking mechanism shown in Fig. 4.
[Fig. 7]

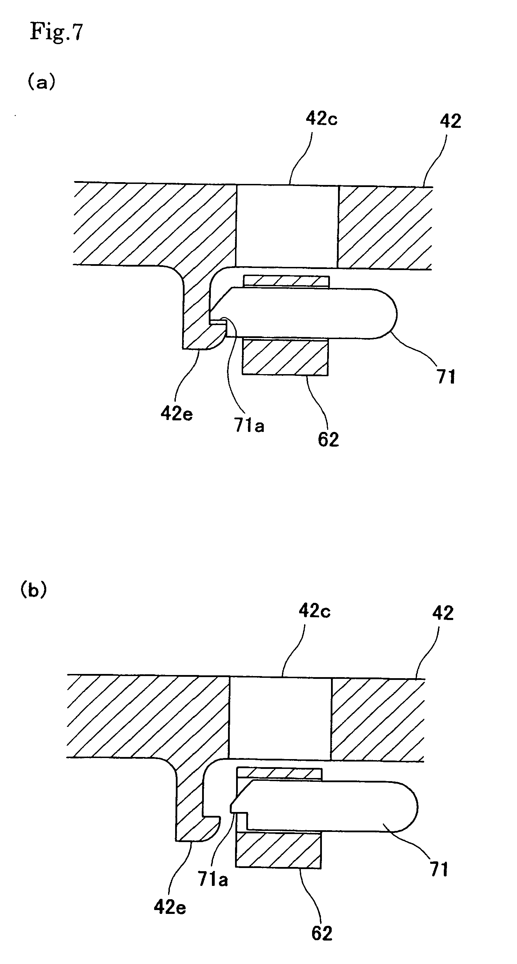

   Fig. 7 is an X-X cross section of the brake shoe mounting structure shown in Fig. 4.

### REFERENCE NUMERALS

- 1: TRACK
- 2: CAR
- 4a: WHEEL
- 4c: TREAD
- 5: BRAKE SYSTEM
- 30: BRAKE SHOE
- 32: BACK PLATE
- 32a: MOUNTING SURFACE
- 32b: MOUNTING PORTION
- 32c: MOUNTING HOLE
- 40: BRAKE-SHOE HEAD
- 40a: MOUNTING OPENING
- 41: BRAKE SHOE MOUNTING PLATE
- 42: SIDE PLATE
- 42c: INSERTION OPENING
- 42e: ENGAGING PORTION
- 50: BRAKE-SHOE COTTER
- 51: INSERTION SECTION
- 52: BEND SECTION
- 52a: FLANGED SECTION
- 60: LOCKING MECHANISM
- 62: FIRST LOCKING MEMBER
- 63a: SPRING (FIRST SPRING MEMBER)
- 63b: BALL (FIRST SPRING MEMBER)
- 71: LOCKING PIN (SECOND LOCKING MEMBER)
- 72: SPRING (SECOND SPRING MEMBER)
- 100: BRAKE SHOE MOUNTING STRUCTURE

### BEST MODE FOR CARRYING OUT THE INVENTION

The following will describe the best mode for carrying out the invention with reference to figures. Fig. 1 is a profile of a railcar having a railcar brake system which adopts a brake shoe mounting structure of an embodiment of the present invention. Fig. 2 is a profile of a railcar brake system adopting the brake shoe mounting structure of the present invention.
A track 1 shown in Fig. 1 is a path (rail track) on which a car 2 moves. The track 1 is constituted by components such as a rail 1a which supports and guides the car 2. The car 2 is a railcar driven by electricity or internal combustion, and includes components such as a car body 3, bogies 4, and a brake system 5 adopting the brake shoe mounting structure 100. The car body 3 is a structure for housing and transporting passengers. The bogies 4 support and move the car body 3. Each of the bogies 4 is constituted by components such as wheels 4a which rotationally contact the rail 1a and a bogie frame 4b which supports the wheels 4a. Each of the wheels 4a has a tread 4c which generates frictional resistance while being in contact with the rail 1a (see Fig. 2).

The brake system 5 shown in Fig. 2 controls the movement by pressing a brake shoe 30 onto the tread 4c of the wheel of the car 2 which is moving. The brake system 5 adopts the brake shoe mounting structure 100 of the present invention, and is arranged so that the brake shoe 30 is mounted to a brake-shoe head 40 by means of a brake-shoe cotter 50. The brake system 5 further includes components such as a brake cylinder unit 6, a driving force transmission mechanism 7, and a brake-shoe head suspender 8. The brake operates in the following way: Compressed air is brought into a cylinder 6a of the brake cylinder unit 6 via a feed opening 6b. Against the biasing force of a spring 6c, a piston 6d moves in the P1 direction (indicated by an arrow in Fig. 2) so as to bias a connecting pin 9, so that a lever 11 rotates about a fulcrum pin 10 in the P2 direction (indicated by an arrow in Fig. 2). The lever 11 has a ball-shaped through hole 11a and this ball-shaped through hole 11a is engaged with a ball-shaped bearing 12 into which a push bar 15 is screwed. As the lever 11 rotates in the P2 direction, the brake-shoe head suspender 8 rotates about the connecting pin 13 in the P3 direction (indicated by an arrow in Fig. 2) and the push bar 15 moves in the P4 direction (indicated by an arrow in Fig. 2). As a result, the brake-shoe head 40 which is swingably connected to the push bar 15 and the brake-shoe head suspender 8 by the connecting pin 14 moves in the D direction so that a friction surface 31a of the brake shoe 30 fixed to the brake-shoe head 40 is pressed onto the tread 4c. Consequently the rotation of the wheel 4a is controlled by the friction force generated between the tread 4c and the friction surface 31a.

The brake shoe mounting structure 100 of the present embodiment is a structure for mounting a brake shoe 30 to a brake-shoe head 40 by means of a brake-shoe cotter 50, in the above-described brake system 5.
Fig. 3 is a profile of the brake shoe mounting structure 100 of the present embodiment. In addition, Fig. 4 is an elevation of the brake shoe mounting structure 100 shown in Fig. 3. In addition, Fig. 5 is an enlarged view of the locking mechanism shown in Fig. 3, and Fig. 6 is an enlarged view of the locking mechanism shown in Fig. 4.

The brake shoe 30 is a plate-shaped member having a substantially circular-arc appearance. The brake shoe 30 is constituted by: a brake friction member 31 having a friction surface 31a which contacts the tread 4c so as to generate friction therewith; and a back plate 32 having a surface (mounting surface) 32a which contacts the brake-shoe head 40 and is opposite to the friction surface 31a. The brake friction member 31 is formed by, for example, adding powders having predetermined brake shoe properties to a base made of cast iron, synthetic resin, or metal powders including a predetermined amount or more of typical cast iron, phosphorus, manganese, or the like, and then conducting sinter molding. The back plate 32 has, at the central part of the mounting surface32a in the longitudinal direction, a mounting portion 32b which protrudes away from the brake friction member 31. The mounting portion 32b is formed of an M-shaped curved plate, and has two, i.e. upper and lower mounting holes 32c through which the brake-shoe cotter 50 can penetrate in the direction substantially in parallel to the length of the back plate 32.

As illustrated in Fig. 4, the brake-shoe cotter 50 is L-shaped and has a long plate-like insertion section 51 capable of penetrating the mounting holes 32c and a bend section 52 which extends in the direction perpendicular to the length of the insertion section 51. The insertion section 51 is inserted into the mounting hole 32c and regulates a positional change of the brake shoe 30 in relation to the brake-shoe head 40. The brake-shoe cotter 50 further has a flanged section 52a at the end portion on the bend section 52 side. The flanged section 52a is widened in the direction perpendicular to the length of the bend section 52. On the insertion section 51 side, the end portion of the brake-shoe cotter 50 is narrowed so that that end portion is easily inserted into the mounting holes 32c.

The brake-shoe head 40 is made of metal and formed to have a substantially circular-arc appearance by casting or sheeting, in the same manner as the brake shoe 30. The brake-shoe head 40 has: a brake shoe mounting plate 41 which is provided to face the mounting surface 32a of the brake shoe 30 for the purpose of biasing the mounting surface 32a; and two side plates 42 and 43 which are perpendicular to the brake shoe mounting plate 41 and extend along the rotational direction of the wheel 4a of the railcar.
The brake shoe mounting plate 41 is constituted by mounting plates 41a and 41b. The gap between these plates is arranged to allow the mounting portion 32b of the brake shoe 30 to penetrate through the gap. As the mounting portion 32b of the brake shoe 30 is inserted into the opening (mounting opening 40a) between the mounting plate 41a and the mounting plate 41b, the mounting portion 32b contacts an end portion of the mounting plate 41a or the mounting plate 41b so that a positional change of the brake shoe 30 is regulated in the rotational direction of the wheel 4a. The mounting plates 41a and 41b respectively have, at around the end portions on the mounting opening 40a side, cotter supporting sections 41c and 41d protruding from the surfaces opposite to the brake shoe 30. Further, the side plates 42 and 43 respectively have notches 42a and 43a in order to allow the mounting portion 32b of the brake shoe 30 to penetrate into the mounting opening 40a from the lateral side of the brake-shoe head 40. Further, the side plates 42 and 43 respectively have holes 42b and 43b into which the connecting pin 14 is inserted. The connecting pin 14 is a shaft by which the push bar 15 and the brake-shoe head suspender 8 are fixed to the brake-shoe head 40.

The side plate 42, which is a side plate provided on the side where an operator carries out an operation to mount the brake shoe 30, has an insertion opening 42c which is a through hole used for inserting the brake-shoe cotter 50 into the gap between the side plate 42 and the side plate 43. The insertion opening 42c is formed above the notch 42a, and is shaped to be long in the direction that the brake-shoe cotter 50is inserted into the mounting hole 32c of the brake shoe 30.

The side plate 42 is further provided with a locking mechanism 60 which regulates a positional change of the brake-shoe cotter 50 inserted into the mounting holes 32c, in the direction in which the brake-shoe cotter 50 penetrates the mounting holes 32c (see Fig. 4). The locking mechanism 60 includes: a first locking member 62 which is swingably supported by a pin 61 at one end; and a spring member 63 (first spring member) which is disposed to bias the end of the first locking member 62 on which end the member 62 is supported by the pin 61. The pin 61 is inserted into and supported by a bearing which is formed to protrude from the surface of the side plate 42. The spring member 63 is constituted by: a spring 63a which is inserted into and supported by a groove 42d on the side plate 42; and a ball 63b made of metal or the like, which is rotatably disposed at the end portion of the spring 63a on the first locking member 62 side.

The tip 62c of the first locking member 62 is formed to spread in the direction perpendicular to the swinging surface. The first locking member 62 moves to a position indicated by A in the figure, i.e. to the locked state. In other words, the first locking member 62 moves so as to cover the insertion opening 42c. After the movement, a positional change of the brake-shoe cotter 50 toward the upper edge of the insertion opening 42c is regulated on account of the contact of the first locking member 62 with the bend section 52 of the brake-shoe cotter 50. From the locked state, the tip 62c can be moved to a position where the length of the first locking member 62 is perpendicular to the side plate 42 (unlocked state indicated by B in the figure), by swinging for about 90° the tip 62c in the direction away from the side plate 42 (i.e. in the direction indicated by the arrow b in the figure). In this unlocked state, the first locking member 62 does not regulate a positional change of the brake-shoe cotter 50 and hence the brake-shoe cotter 50 is detachable.

In the unlocked state, by the ball 63b the first locking member 62 is biased in the perpendicular direction at the end face 62e. At this moment the biasing force of the spring 63a is exerted as resistance against the swing of the first locking member 62 in the "a" direction. Therefore the first locking member does not swing in the direction toward the locked state on account of its own weight, and hence the first locking member is maintained in the unlocked state.
Fig. 6 shows an enlarged view of the locking mechanism 60 of Fig. 4. As shown in Fig. 6, when the first locking member 62 in the unlocked state swings in the direction of the arrow a, the surface in contact with the ball 63b changes from the end face 62e to the side face 62d. In this state, the first locking member 62 receives a rotational force in the direction of the arrow a, and hence the first locking member 62 is automatically shifted to the locked state in which the tip 62c is in contact with the opening edge. In the locked state, the side face 62d is not perpendicular to the direction of biasing by the spring 63a but is sloped down toward the edge on the pin 61 side. The first locking member 62 is therefore maintained in the state of being biased in the direction of swinging to the locked state (i.e. in the direction of the arrow a in the figure).

In addition, the contact surface between the ball 63b and the first locking member 62 can be changed from the end face 62e to the back face 62f by further swinging the first locking member 62 in the "b" direction from the unlocked state. In so doing, the first locking member 62 receives a rotational force in the "b" direction by the biasing force of the spring 63a via the ball 63b, and the first locking member 62 is shifted to and maintained in a state of being swung for about 180° from the locked state (i.e. maintained in the state indicated by C in Fig. 4).

As shown in Fig. 5, the first locking member 62 has through holes 62a and 62b formed in parallel to the axis direction of the pin 61 which functions as a swinging axis, and into these through holes 62a and 62b a U-shaped locking pin 71 (second locking member) is inserted to be slidable along the through holes 62a and 62b. With this, the locking pin 71 is movable in the direction perpendicular to the swinging surface of the first locking member 62. The locking pin 71 is provided with a stepped locking pawl 71a on the edge on the through hole 62a side. On the other edge on the through hole 62b side, the locking pin 71 has a lock head portion 71b at which the diameter is increased for the purpose of preventing the locking pin 71 from falling out from the through hole 62b. The through hole 62b is counterbored for a predetermined depth along the length of the hole from the lock head portion 71b side, so that the hole 62b is stepped. Between the stepped part of the through hole 62b and the lock head portion 71b, a spring 72 (second spring member) is provided. This spring 72 biases the lock head portion 71b in the direction away from the first locking member 62, so that the locking pin 71 is biased in the direction in which the locking pawl 71a protrudes from the through hole 62a.

Fig. 7 shows an enlarged view of the X-X cross section of Fig. 3. As illustrated in the figure, the side plate 42 of the brake-shoe head 40 has on its surface an engaging portion 42e which protrudes like a hook and is provided so as to correspond to the position of the locking pawl 71a of the locking pin 71. When no external force is applied to the locking pin 71, the locking pawl 71a of the locking pin 71 is maintained to be engaged with the engaging portion 42e (see Fig. 7(a)) by the biasing force of the spring 72 (in the α direction in Fig. 5), while the first locking member 62 swings so as to shift from the locked state to the unlocked state. On the other hand, when the lock head portion 71b of the locking pin 71 is biased toward the first locking member 62 against the biasing force of the spring 72, (i.e. when the lock head portion 71b is biased in the β direction in Fig. 5) , the locking pawl 71a is moved in the direction toward the inside of the through hole 62a, so as to reach a position where the locking pawl 71a does not engage with the engaging portion 42e (i.e. the position illustrated in Fig. 7(b)). In this way, the locking structure using the U-shaped locking pin 71 and the spring 72 makes it possible, with a simple mechanism, to arrange the biasing direction of the spring 72 to be identical with the direction in which the locking pawl 71a protrudes from the through hole 62a.

Now the following describes an operation to fix the brake shoe 30 to the brake-shoe head 40 by using the brake-shoe cotter 50.

First, for the insertion of the brake-shoe cotter 50 through the insertion opening 42c, the first locking member 62 is swung to a position where the member 62 is substantially perpendicular to the side plate 42 (position B in Fig. 4) to achieve the unlocked state. The first locking member 62 is maintained in this unlocked state because the end face 62e is biased by the spring 63a via the ball 63b. This improves the operating efficiency because the operator is not required to keep the first locking member 62 in the unlocked state. Alternatively, the mounting operation may be carried out while the first locking member 62 is maintained not to protrude toward the operator by swinging the first locking member 62 to the position C in Fig. 4.

Then the mounting surface 32a of the brake shoe 30 is brought to contact with the brake shoe mounting plate 41 of the brake-shoe head 40, and the mounting portion 32d of the brake shoe 30 is maintained to penetrate the mounting opening 40a of the brake-shoe head 40. Then the brake-shoe cotter 50 is mounted in such a way that the tip of the insertion section 51 is inserted into the insertion section 51 of the side plate 42 in the direction in parallel to the rotational axis of the wheel 4a, and the insertion section 51 is rotated downward for about 90° so that the insertion section 51 is inserted into the mounting holes 32c. At the edge of the bend section 52, a flanged section 52a is provided which is longer than the shorter diameter of the insertion opening 42c (i.e. the width of the opening 42c in the direction perpendicular to the length thereof). This prevents the operator from erroneously inserting the brake-shoe cotter 50 into the insertion opening 42c from the edge on the bend section 52 side, and hence the fixation is sufficiently achieved.

The brake-shoe cotter 50 inserted into the mounting holes 32a is arranged so that the flanged section 52a protrudes from the insertion opening 42c. Therefore a positional change in the insertion direction is regulated because the flanged section 52a contacts the lower edge of the insertion opening 42c. Furthermore, the brake-shoe head 40 is supported at three points, i.e. the cotter supporting sections 41c and 41d and the curved portion 32d of the mounting portion 32b of the brake shoe 30. This regulates the movement of the brake shoe 30 towards the wheel 4a with respect to the brake shoe 40.

In this way, an attachment/detachment operation is easily carried out because the brake-shoe cotter 50 is inserted from the side face of the brake-shoe head 40 (i.e. in the direction in parallel to the rotational axis of the train wheel) so that the brake shoe 30 is fixed to the brake-shoe head 40. Furthermore, a brake shoe with a conventional shape is usable because the brake shoe 30 having the mounting holes 32c are attachable to the mounting portion 32b protruding from the mounting surface 32a. This is cost effective because it is unnecessary to manufacture a brake shoe having a special shape.

Thereafter, the first locking member 62 is swung toward the insertion opening 42c so that the surface biased by the ball 63b is changed from the end face 62e to the side face 62d, with the result that the first locking member 62 is biased at the side face 62d and swung so as to be shifted to the locked state. In so doing, the locking pin 71 contacts the engaging portion 42e and moves in the direction opposite to the biasing direction of the spring 72, so that the shift to the locked state is achieved. After the shifting, the spring 72 recovers the elasticity and the locking pin 71 is moved to and maintained at the position where the pin 71 is engaged with the engaging portion 42e.

In this state, the brake-shoe cotter 50 is arranged so that the movement of the insertion opening 42c toward the upper edge is regulated because the flanged section 52a contacts the tip 62c. This prevents the brake-shoe cotter 50 from falling out from the mounting holes 32c. Because of the above, the brake shoe 30 is surely fixed to the brake-shoe head 40.

In addition to the above, the swing of the first locking member 62 for the shifting from the locked state to the unlocked state is regulated by the engagement of the locking pawl 71a of the locking pin 71 with the engaging portion 42e. This makes it possible to surely keep the locked state even if an external force is applied to the first locking member 62 in the direction of the swing to the unlocked state (i.e. in the direction of the arrow b in Fig. 4), thereby preventing the locked state from being mistakenly canceled because of reasons such as vibration associated with the running of the car.

In addition to the above, when the first locking member 62 is swung so that the unlocked state is shifted to the locked state, the locking pawl 71a of the locking pin 71 is automatically engaged with the engaging portion 43e. It is therefore unnecessary to actively operate the second locking member 71 and hence the mounting operation is efficiently carried out.

Also when the second locking member is not provided for further simplification of the locking mechanism, it is possible to prevent the locked state from being mistakenly canceled because of reasons such as vibration associated with the running of the car, because a force against the biasing force of the spring 63a is required to swing the first locking member 62 from the locked state to the unlocked state.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A brake shoe mounting structure (100) for a rail car tread (4c), by which a brake shoe (30) having a mounting portion (32b) protruding from a mounting surface (32a) is fixed to a brake-shoe head (40) in such a way that the mounting portion (32b) is inserted into the brake-shoe head (40) and a brake shoe cotter (50) is inserted into a mounting hole (32c) of the mounting portion,
wherein,
the brake-shoe head (40) which allows the mounting portion (32b) to penetrate thereto and has a mounting opening (40a) regulating, by contacting the mounting portion, a positional change of the brake shoe in a rotational direction of a wheel (4a) of a railcar,
**characterized in that**:
the brake-shoe cotter (50) is L-shaped and has an insertion section (51) inserted into the mounting hole (32c) and regulating a positional change of the brake shoe (30) and a bend portion (52) bending from a longitudinal edge of the insertion section (51);
the brake shoe mounting structure (100) further comprises a locking mechanism (60) which regulates a positional change of the brake-shoe cotter (50) inserted into the mounting hole (32c);
the brake-shoe head (40) has an insertion opening (42c) which is long in a direction of insertion of the brake-shoe cotter (50) into the mounting hole (32c) and allows the brake-shoe cotter (50) to be inserted into the mounting hole (32c) in a direction in parallel to the rotational axis of the wheel (4a),
the brake-shoe cotter (50) is shaped so as to allow an edge of the brake-shoe cotter near the bend section (52) to protrude from the insertion opening when the insertion section (51) is inserted into the mounting hole (32c), and
the locking mechanism (60) has a first locking member (62) which is swingably supported by the brake-shoe head at one end, and the first locking member is capable of swinging between (i) a locked state in which the first locking member (62) is in contact with the bend section (52) and a positional change of the brake-shoe cotter (50) toward an upper edge of the insertion opening (42c) is regulated and (ii) an unlocked state in which the positional change of the brake-shoe cotter (50) is unregulated.

2. The brake shoe mounting structure according to claim 1, wherein, the locking mechanism (60) further includes a first spring member (63a) which is provided on the brake-shoe head (40) so as to bias the first locking member, and
in the locked state the first locking member (62) is biased by the first spring member (63a) in a swinging direction of maintaining the locked state, whereas, in the unlocked state in which the first locking member is swung from the locked state for a predetermined angle, the first locking member (62) is biased in a direction of maintaining the unlocked state.

3. The brake shoe mounting structure according to claim 1 or 2, wherein, the locking mechanism (60) further includes a second locking member (71) which is provided on the first locking member (62) and is movable to be perpendicular to a swinging surface of the first locking member, and
the brake-shoe head (40) has an engaging portion (42e) which is, in the locked state, engaged with the second locking member (71) so as to restrict a swinging movement of the first locking member (62) toward the unlocked state.

4. The brake shoe mounting structure according to claim 3, wherein, the locking mechanism (60) further includes a second spring member (72) which biases the second locking member (71) in such a way as to maintain the second locking member to be engaged with the engaging portion (42e), and
when the first locking member (62) moves from the unlocked state to the locked state, the second locking member (71) is in contact with the engaging portion (42e) and biased in a direction opposite to a biasing direction of the second spring member (72), so as to permit shifting to the locked state, and after the shifting to the locked state, the second locking member (71) is maintained at a position of being engaged with the engaging portion (42e) because the second spring member (72) recovers elasticity.

5. The brake shoe mounting structure according to any one of claims 1 to 4, further comprising a flanged section (52a) which is provided on the edge near the bend portion (52) and is longer than the shorter diameter of the insertion opening (42c).

## Patentansprüche

1. Bremsbackenbefestigungskonstruktion (100) für eine Lauffläche (4c) eines Eisenbahnwagens, mittels welcher eine Bremsbacke (30) mit einem Befestigungsabschnitt (32b), der von einer Befestigungsfläche (32a) vorsteht, an einem Bremsbackenkopf (40) in einer solchen Weise befestigt ist, daß der Befestigungsabschnitt (32b) in den Bremsbackenkopf (40) eingesetzt ist und ein Bremsbackenkeil (50) in eine Befestigungsöffnung (32c) des Befestigungsabschnitts eingesetzt ist,
wobei
der Bremsbackenkopf (40), der dem Befestigungsabschnitt (32b) das Eindringen in diesen gestattet und eine Befestigungsöffnung (40a) aufweist, die durch Kontaktnahme mit dem Befestigungsabschnitt eine Positionsänderung der Bremsbacke in einer Drehrichtung eines Rads (4a) eines Eisenbahnwagens reguliert,
**dadurch gekennzeichnet, daß**:
der Bremsbackenkeil (50) L-förmig ist und einen Einsatzabschnitt (51), der in die Befestigungsöffnung (32c) eingesetzt ist und eine Positionsänderung der Bremsbacke (30) reguliert, und einen gebogenen Abschnitt (52) aufweist, der von einem Längsrand des Einsatzabschnitts (51) aus gebogen ist,
die Bremsbackenbefestigungskonstruktion (100) außerdem einen Verriegelungsmechanismus (60) umfaßt, der eine Positionsänderung des in die Befestigungsöffnung (32c) eingesetzten Bremsbackenkeils (50) reguliert,
der Bremsbackenkopf (40) eine Einsatzöffnung (42c) aufweist, die in einer Einsatzrichtung des Bremsbackenkeils (50) in die Befestigungsöffnung (32c) lang ist und das Einsetzen des Bremsbackenkeils (50) in die Befestigungsöffnung (32c) in einer zu der Drehungsachse des Rads (4a) parallelen Richtung zuläßt,
der Bremsbackenkeil (50) so geformt ist, daß ein Rand des Bremsbackenkeils nahe dem gebogenen Abschnitt (52) aus der Einsatzöffnung vorstehen kann, wenn der Einsatzabschnitt (51) in die Befestigungsöffnung (32c) eingesetzt wird, und
der Verriegelungsmechanismus (60) ein erstes Verriegelungsglied (62) aufweist, das verschwenkbar an dem Bremsbackenkopf an einem Ende gelagert ist, und das erste Verriegelungsglied zwischen (i) einem verriegelten Zustand, in dem das erste Verriegelungsglied (62) in Kontakt mit dem gebogenen Abschnitt (52) steht und eine Positionsänderung des Bremsbackenkeils (50) in Richtung zu einem oberen Rand der Einsatzöffnung (42c) reguliert wird, und (ii) einem unverriegelten Zustand verschwenken kann, in dem die Positionsänderung des Bremsbackenkeils (50) nicht reguliert wird.

2. Bremsbackenbefestigungskonstruktion nach Anspruch 1, wobei der Verriegelungsmechanismus (60) außerdem ein erstes Federglied (63a) umfaßt, das an dem Bremsbackenkopf (40) so vorgesehen ist, daß es das erste Verriegelungsglied vorspannt, und
in dem verriegelten Zustand das erste Verriegelungsglied (62) von dem ersten Federglied (63a) in einer Verschwenkrichtung zum Aufrechterhalten des verriegelten Zustands vorgespannt wird, wohingegen in dem unverriegelten Zustand, in dem das erste Verriegelungsglied um einen vorgegebenen Winkel aus dem verriegelten Zustand herausgeschwenkt wird, das erste Verriegelungsglied (62) in einer Richtung zum Aufrechterhalten des unverriegelten Zustands vorgespannt wird.

3. Bremsbackenbefestigungskonstruktion nach Anspruch 1 oder 2, wobei der Verriegelungsmechanismus (60) außerdem ein zweites Verriegelungsglied (71) umfaßt, das an dem ersten Verriegelungsglied (62) vorgesehen und senkrecht zu einer Verschwenkfläche des ersten Verriegelungsglieds bewegbar ist, und
der Bremsbackenkopf (40) einen Eingriffsabschnitt (42e) aufweist, der in dem verriegelten Zustand mit dem zweiten Verriegelungsglied (71) so in Eingriff steht, daß eine Verschwenkbewegung des ersten Verriegelungsglieds (62) in Richtung zu dem unverriegelten Zustand begrenzt wird.

4. Bremsbackenbefestigungskonstruktion nach Anspruch 3, wobei der Verriegelungsmechanismus (60) außerdem ein zweites Federglied (72) umfaßt, das das zweite Verriegelungsglied (71) in einer solchen Weise vorspannt, daß das zweite Verriegelungsglied in Eingriff mit dem Eingriffsabschnitt (42e) gehalten wird, und
während der Bewegung des ersten Verriegelungsglieds (62) aus dem unverriegelten Zustand in den verriegelten Zustand das zweite Verriegelungsglied (71) in Kontakt mit dem Eingriffsabschnitt (42e) steht und in Gegenrichtung zu der Vorspannrichtung des zweiten Federglieds (72) vorgespannt wird, so daß eine Verschiebung in den verriegelten Zustand zugelassen wird, und das zweite Verriegelungsglied (71) nach der Verschiebung in den verriegelten Zustand in einer Position des Ineingriffstehens mit dem Eingriffsabschnitt (42e) gehalten wird, weil das zweite Federglied (72) die Elastizität wiedergewinnt.

5. Bremsbackenbefestigungskonstruktion nach einem der Ansprüche 1 bis 4, außerdem umfassend einen geflanschten Abschnitt (52a), der an dem Rand nahe dem gebogenen Abschnitt (52) vorgesehen und länger als der kürzere Durchmesser der Einsatzöffnung (42) ist.

## Revendications

1. Structure de montage de segment de frein (100) pour une bande de roulement de véhicule ferroviaire (4c), grâce à laquelle un segment de frein (30) ayant une partie de montage (32b) dépassant d'une surface de montage (32a) est fixé sur une tête de segment de frein (40) d'une manière telle que la partie de montage (32b) est insérée dans la tête de segment de frein (40) et une clavette de segment de frein (50) est insérée dans un trou de montage (32c) de la partie de montage,
la tête de segment de frein (40) permettant à la partie de montage (32b) de pénétrer dedans et ayant une ouverture de montage (40a) qui régule, en entrant en contact avec la partie de montage, un changement de position du segment de frein dans une direction de rotation d'une roue (4a) d'un véhicule ferroviaire,
**caractérisée en ce que** :
la clavette de segment de frein (50) est en forme de L et a une section d'insertion (51) insérée dans le trou de montage (32c) et qui régule un changement de position du segment de frein (30) et une partie coudée (52) se repliant depuis un bord longitudinal de la section d'insertion (51) ;
la structure de montage de segment de frein (100) comporte en outre un mécanisme de blocage (60) qui régule un changement de position de la clavette de segment de frein (50) insérée dans le trou de montage (32c) ;
la tête de segment de frein (40) a une ouverture d'insertion (42c) qui est longue dans une direction d'insertion de la clavette de segment de frein (50) dans le trou de montage (32c) et permet à la clavette de segment de frein (50) d'être insérée dans le trou de montage dans une direction parallèle à l'axe de rotation de la roue (4a),
la clavette de segment de frein (50) est formée de façon à permettre à un bord de la clavette de segment de frein près de la section coudée (52) de dépasser de l'ouverture d'insertion quand la section d'insertion (51) est insérée dans le trou de montage (32c), et
le mécanisme de blocage (60) a un premier élément de blocage (62) qui est supporté de façon oscillante par la tête de segment de frein au niveau d'une extrémité, et le premier élément de blocage est capable d'osciller entre (i) un état bloqué dans lequel le premier élément de blocage (62) est en contact avec la section coudée (52) et un changement de position de la clavette de segment de frein (50) vers un bord supérieur de l'ouverture d'insertion (42c) est régulé et (ii) un état débloqué dans lequel le changement de position de la clavette de segment de frein (50) n'est pas régulé.

2. Structure de montage de segment de frein selon la revendication 1, dans laquelle le mécanisme de blocage (60) comprend en outre un premier élément de ressort (63a) qui est prévu sur la tête de segment de frein (40) de façon à rappeler le premier élément de blocage, et
dans l'état bloqué, le premier élément de blocage (62) est rappelé par le premier élément de ressort (63a) dans une direction d'oscillation de maintien de l'état bloqué, tandis que, dans l'état débloqué dans lequel le premier élément de blocage est basculé par rapport à l'état bloqué sur un angle prédéterminé, le premier élément de blocage (62) est rappelé dans une direction de maintien de l'état débloqué.

3. Structure de montage de segment de frein selon la revendication 1 ou 2, dans laquelle le mécanisme de blocage (60) comprend en outre un deuxième élément de blocage (71) qui est prévu sur le premier élément de blocage (62) et est mobile afin d'être perpendiculaire à une surface d'oscillation du premier élément de blocage, et
la tête de segment de frein (40) a une partie d'engagement (42e) qui, dans l'état bloqué, est engagée avec le deuxième élément de blocage (71) de façon à limiter un mouvement d'oscillation du premier élément de blocage (62) vers l'état débloqué.

4. Structure de montage de segment de frein selon la revendication 3, dans laquelle le mécanisme de blocage (60) comprend en outre un deuxième élément de ressort (72) qui rappelle le deuxième élément de blocage (71) de manière à maintenir le deuxième élément de blocage devant être engagé avec la partie d'engagement (42e), et
quand le premier élément de blocage (62) se déplace de l'état débloqué vers l'état bloqué, le deuxième élément de blocage (71) est en contact avec la partie d'engagement (42e) et rappelé dans une direction opposée à une direction de rappel du deuxième élément de ressort (72), de façon à permettre un déplacement vers l'état bloqué, et après le déplacement vers l'état bloqué, le deuxième élément de blocage (71) est maintenu dans une position d'engagement avec la partie d'engagement (42e) du fait que le deuxième élément de ressort (72) retrouve de l'élasticité.

5. Structure de montage de segment de frein selon l'une quelconque des revendications 1 à 4, comportant en outre une section à flasque (52a) qui est prévue sur le bord près de la partie coudée (52) et est plus longue que le diamètre plus court de l'ouverture d'insertion (42c).
